# EUROPEAN PATENT APPLICATION

(11) **EP 2 481 545 A1**
(43) Date of publication of application: **01.08.2012**
(21) Application number: 12000424.7
(22) Date of filing: 24.01.2012
(51) Int. Cl.: B29C 33/18, B29C 33/30, B29C 33/38, B29C 33/40

(54) **Device to cast a plaster core segment of a tire mold and the method of its manufacture**

(30) Priority: 28.01.2011 CZ 20110043
(71) Applicant: Barum Continental Spol. s.r.o, 76531 Otrokovice (CZ)
(72) Inventor: Miko, Roman, Zlin CZ76001 (CZ); Celadnik, Radomil, Hulin CZ76824 (CZ)
(74) Representative: Kreizlova, Dana

(57) **Abstract**

The device to cast a plaster core segment of a tire mold consists of the fixation base (1), the inner arc of which bears an arc-shaped elastic matrix (2), which bears the tire mold tread pattern (3) in the inner part of the arch, and is connected with the fixation base (1) temporarily using its fixation interface (4), which matches the solid fixation interface (5) of the inverted shape, situated in the inner part of the arc of the fixation base (1) bearing open micro-ducts (6) of the distributing vacuum system (7) which is created inside the fixation base (1). The method of manufacture and the industrial applicability of the device to cast a plaster core segment of a tire mold is **characterized in that** the 3D print technology makes an elastic matrix (2) with the tire mold tread pattern (3) in the shape defined by the virtual CAD model of the tire mold, and such elastic matrix (2), using its fixation interface (4), is seated in the pre-manufactured solid fixation interface (5) of the inverted shape, created in the inner arc of the fixation base (1), to which the elastic matrix (2) is attached temporarily, for the period of casting the plaster compound into the inner arc of the elastic matrix (2) and subsequent solidification of this plaster compound in the shape of the tire mold's tread pattern using the support of the distributing vacuum system (7).

## Description

### Field of the invention

The invention relates to the device to cast a plaster core segment of a tire mold and the method of its manufacture. The solution is applicable in the tire manufacture industry to make molds with innovative tire tread pattern designs.

### Description of the Related Art

To make a plaster core of a tire mold, the current technology requires making a negative model of the tire's tread pattern part. The positive model is the tire itself, its tread pattern, to be exact.

Before any such tire is produced - using a new tread pattern design, such design must be transformed into the physical model so that the tread pattern could be transferred to the negative model, called the flex, which forms the shape basis of the flex's mold into which the plaster core segment is cast.

The transformation of the tread pattern design into the physical model has up to now been done using a wooden model of a tire, which is a time-consuming and costly operation demanding high precision. The surface of the model which is to be used to make the negative shape - the flex - must be degreased and treated with anti-stick agent before its use. The outer profile of the cavity of the mold for flex casting is a special device in the form of a sector of an annulus. Setting the position of the model to the device, which is decisive for the shape of the final flex, is done using compatible adjusting elements placed on both sides in the circumferential direction. The closure of the cast mold for the flex at both ends of the segments is done using a mechanical barrier and subsequent sealing of the connections.

This is followed by another phase, the preparation of a two-component cast compound - the flexibel. The liquid cast compound cannot contain any bubbles. The compound is then poured into the cast mold, and solidifies for 10 - 15 hours. After sufficient solidification, the model is "demolded", i.e. removed, which depends on the flex elasticity; and the last phase involves minor mechanical jobs, such as mold flash removal. The flex remains seated in the device in which it was made, as this guarantees its alignment, corresponding with the model.

The properties of the flex are governed by the technological requirements of the subsequent operation of the preparation and demolding of the plaster core. The flex solidification is required to be in the range of 9 - 15°Shore A, the elasticity until rupture is approx. 500%, further specifications are listed in the Elastosil M4512 material sheet.

The main disadvantage of the traditional method described above is the necessity to make a model, in particular, which is a costly and time-consuming operation. Furthermore, degreasing and anti-stick agents are required. The success of the process depends on a range of casting devices for two-component flexibel making a bubble-free compound. To sum up, it is apparent that the manufacture of such negative shape of the plaster core and subsequent manufacture of the plaster core using the traditional technology described above is a demanding, time-consuming and costly process. The technological applicability of the flex made using such method is limited to mere 2 months.

### Summary of the invention

The disadvantages and shortcomings of the previous devices used to make a plaster core of a tire mold are removed considerably by the device to cast a plaster core segment of a tire mold according to the invention and the method of its manufacture. The invention is **characterized in that** the device consists of a fixation base, on the inner arc of which there is an arc-shaped elastic matrix, which bears the tire mold tread pattern in the inner part of its arch, and is temporarily connected with the fixation base through its fixation interface. This fixation interface matches the solid fixation interface of an inverted shape, which is placed in the inner arc of the fixation base and bears micro-ducts, open to the surface, of the vacuum system created inside the fixation base.

The method of manufacture and the applicability of the device to cast a plaster core segment of a tire mold according to the present invention is **characterized in that** the 3D print technology makes an elastic matrix with a tire mold tread pattern in the shape defined by the virtual CAD model of the tire mold. Such elastic matrix is seated using its fixation interface into a pre-manufactured solid fixation interface of an inverted shape created in the inner arc of the fixation base, to which the elastic matrix is temporarily attached using the support of the vacuum system. The support of the vacuum system lasts during the casting of the plaster compound in the inner arc of the elastic matrix and subsequent solidification of such plaster compound in the shape of the tire tread pattern.

The big advantage of the device to cast a plaster core segment of a tire mold according to the present invention is the fact that the device and the method of its manufacture enable transfer of the positive tire tread pattern shape from the electronic format design phase directly into the negative shape - the device in the physical shape, thus eliminating the necessity to make the positive shape - the tire model. Eliminating this up to now necessary phase saves time and funds considerably. Among other things, it is not necessary to deal with the manufacture of the NC model by programming, no model sipes are required, the assortment of base frames may be reduced. Time savings are significant as well - the manufacturing cycle of casting, including the technical preparation phase, is reduced by approx. 4 days.

### Brief description of drawings

An example of a preferred embodiment of the device to cast a plaster core segment of a tire mold and the method of its manufacture according to the present invention is shown in the drawings attached, where:
- Figure 1 - Device according to the present invention in the view of its assembly from two parts;
- Figure 2 - Both parts of the device prior to its assembly;
- Figure 3 - Fixation base with a fixation interface.

### Preferred embodiments

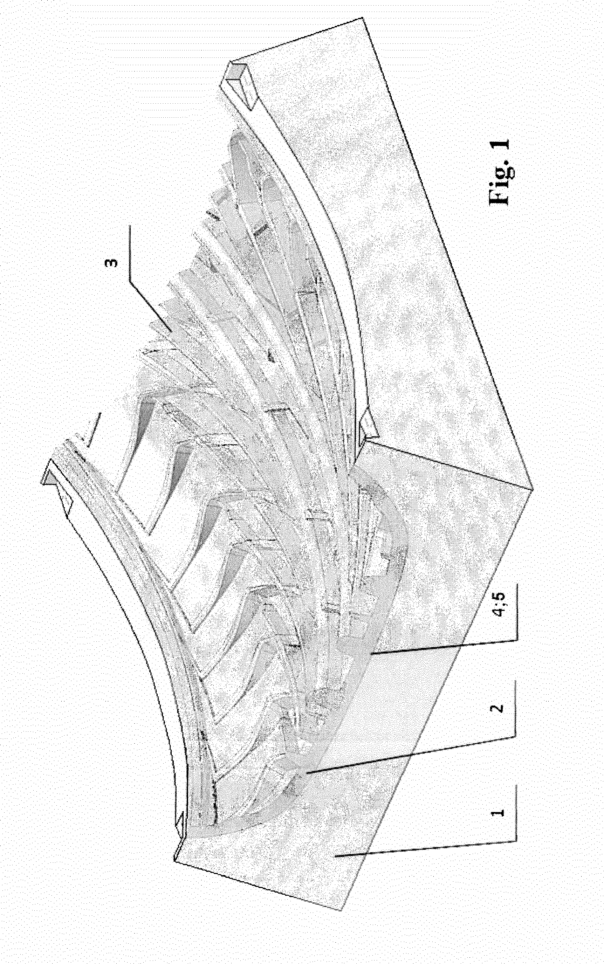

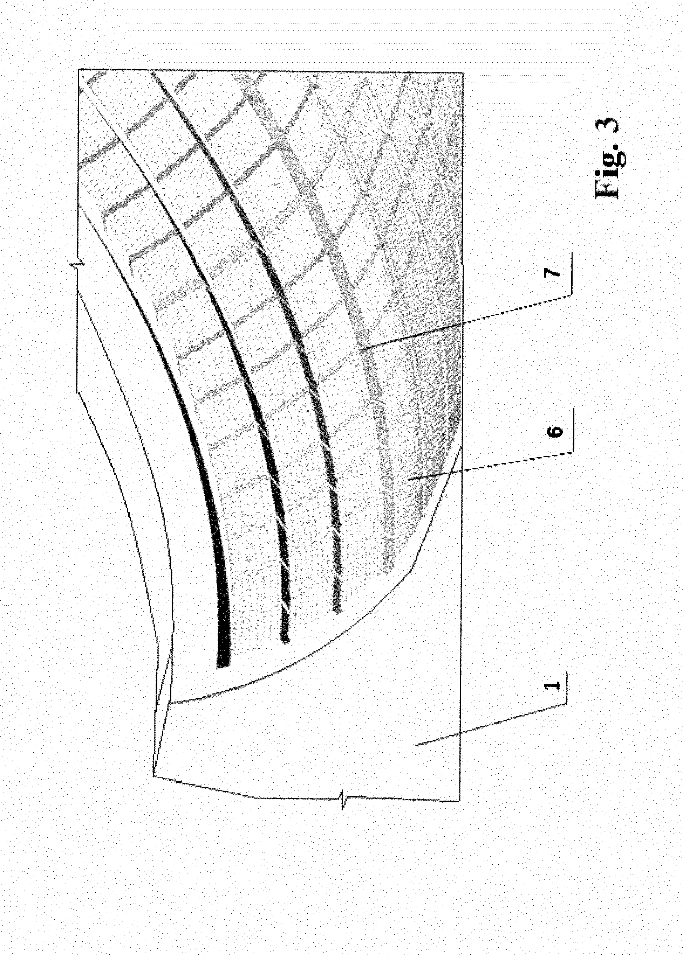

Figure 1 of the drawings attached shows that the device to cast a plaster core segment of a tire mold consists of two basic parts - a solid fixation base 1 and an arc-shaped elastic matrix 2 inserted in the base's inner arch. Such elastic matrix 2 bears the tire mold tread pattern 3 in the inner part of its arc - from the top - and is connected with the fixation base 1 temporarily (removable from it) through its fixation interface 4. This fixation interface 4 represents the shape and structure of the surface of the elastic matrix 2 on its back side, which matches the solid fixation interface 5 of an inverted shape, which is the surface of fixation base 1's inner arc. Both basic parts of the device according to the present invention - the solid and the elastic one - are precisely matched to ensure the precision of the tire mold tread pattern 3, and the connection of the elastic matrix 2 with the fixation base 1 is strengthened using the distributing vacuum system 7 of the fixation base 1 which system consists of a number of micro-ducts 6 open to the surface of the solid fixation interface 5, as shown in Figure 3.

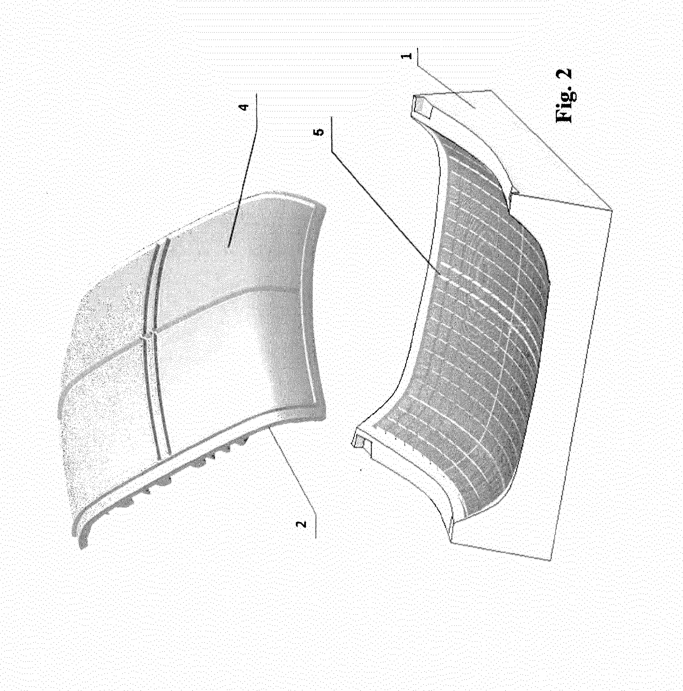

Figure 2 reveals the structure of the solid fixation interface 5 of the fixation base 1, including the system of open micro-ducts 6, which is visible when the support of the vacuum is cancelled and the elastic matrix 2 with its fixation interface 4 is removed. More detailed picture of the solid fixation interface 5 is shown in Figure 3.

The device to cast a plaster core segment of a tire mold works as follows: the elastic matrix 2, on the free surface of which there is the tire mold tread pattern 3, is seated in the fixation base 1, and through the support of the distributing vacuum system 7, the elastic matrix 2 is firmly attached to the fixation base 1. Thus one whole is created which then works analogically as previous flexes - it is used for casting the relevant segment of the mold's plaster core. After the segment has solidified enough, the support of the distributing vacuum system 7 is cancelled and the plaster core segment, together with the elastic matrix 2, is removed from the fixation base 1. Thanks to its elasticity, the elastic matrix 2, which is no longer limited in movement by the fixation base 1, is separated and removed from the surface of the plaster core segment, which is ready to be used in exactly the same way as with the traditional method of tire mold manufacture.

The method of the manufacture of the device to cast a plaster core of a tire mold is **characterized in that** the 3D print technology makes the elastic matrix 2 with the tire mold tread pattern 3, in the shape defined by the virtual CAD model of the tire mold, and such elastic matrix 2 is seated in the pre-manufactured, shape inverted solid fixation interface 5 of the fixation base 1 using the matrix's fixation interface 4.

### Industrial applicability

The device to cast a plaster core segment of a tire mold and the method of its manufacture is applicable in all current tire manufacture industries as it accelerates and simplifies the technology of mold manufacture using virtual CAD designs of innovative tire tread patterns.

## Claims

1. The device to cast a plaster core segment of a tire mold, **characterized in that** it consists of the fixation base (1), the inner arc of which bears an arc-shaped elastic matrix (2), which bears the tire mold tread pattern (3) in the inner part of the arc, and is connected with the fixation base (1) temporarily through its fixation interface (4), which matches the solid fixation interface (5) of an inverted shape, situated in the inner part of the arc of the fixation base (1) and having open micro-ducts (6) of the distributing vacuum system (7) created inside the fixation base (1).

2. The method of manufacture and the industrial applicability of the device to cast a plaster core segment of a tire mold according to claim 1, **characterized in that** the 3D print technology makes an elastic matrix (2) with the tire mold tread pattern (3) in the shape defined by the virtual CAD model of the tire mold, and such elastic matrix (2) is seated, using its fixation interface (4), in the pre-manufactured solid fixation interface (5) of an inverted shape, created in the inner arc of the fixation base (1), to which the elastic matrix (2) is temporarily attached using the support of the distributing vacuum system (7) for the period of casting the plaster compound into the inner arc of the elastic matrix (2) and subsequent hardening of this plaster compound in the shape of the tire mold tread pattern (3).
